# NEUE EUROPÄISCHE PATENTSCHRIFT

(11) **EP 0 526 549 B2**
(45) Veröffentlichungstag und Bekanntmachung des Hinweises auf die Entscheidung über den Einspruch: **03.02.1999**
(45) Hinweis auf die Patenterteilung: 20.07.1994
(21) Anmeldenummer: 91908746.0
(22) Anmeldetag: 22.04.1991
(51) Int. Cl.: B08B 15/00, B30B 15/00, B01J 2/20

(54) **VORRICHTUNG ZUR ERZEUGUNG VON GRANALIEN ODER PASTILLEN AUS FLIESSFÄHIGEM MATERIAL**
DEVICE FOR PRODUCING GRANULES OR TABLETS FROM FREE-FLOWING MATERIALS
DISPOSITIF DE FABRICATION DE GRENAILLES OU DE PASTILLES AVEC DES MATERIAUX A ECOULEMENT LIBRE

(30) Priorität: 26.04.1990 DE 4013405
(43) Veröffentlichungstag der Anmeldung: 10.02.1993
(73) Patentinhaber: GEBR. KAISER MASCHINENFABRIK, D-47813 Krefeld (DE)
(72) Erfinder: KAISER, Herbert, D-4150 Krefeld 11 (DE)
(74) Vertreter: Feldkamp, Rainer, Dipl.-Ing.
(86) Internationale Anmeldenummer: EP9100771
(87) Internationale Veröffentlichungsnummer: WO9116151

(56) Entgegenhaltungen:
- EP-A- 0 131 201
- EP-A- 0 244 849
- DE-C- 2 853 054
- DE-C- 2 941 802
- FR-A- 2 004 278

## Beschreibung

Die Erfindung bezieht sich auf eine Vorrichtung der im Oberbegriff des Patentanspruchs 1 genannten Art.

Eine derartige Vorrichtung ist aus der DE-C-39 02 957 bekannt, auf die vollinhaltlich verwiesen wird. Bei dieser bekannten Vorrichtung wird das fließfähige Material dem Preßspalt zwischen einer umlaufenden Hohlwalze mit Innenverzahnung und einer mit dieser Innenverzahnung in Eingriff stehenden außenverzahnten Auspreßwalze zugeführt. Von den jeweiligen Zahnböden der Innenverzahnung der Hohlwalze erstrecken sich zu deren Außenseite hin Bohrungen, durch die hindurch das Material beim Eingriff mit der Auspreßwalze ausgepreßt und in Form von Pastillen oder Granalien auf einer Kühlfläche abgelegt wird. Die Kühlfläche ist durch ein umlaufendes Kühlband gebildet, das sich an dem unteren Bereich der Hohlwalze vorbeibewegt. Der oberhalb einer horizontalen Mittelebene der Hohlwalze liegende Teil dieser Hohlwalze ist durch einen Heizmantel abgedeckt, der eine Beeinflussung der Temperatur der Hohlwalze ermöglicht.

Beim Austritt des Materials aus den Bohrungen der Hohlwalze und beim Ablegen der Pastillen oder Granalien auf dem Kühlband entstehen bei der Verarbeitung vieler Materialien Abgase, die aufgrund von Umweltschutzbestimmungen nicht unkontrolliert an die Umgebung abgegeben werden dürfen.

Um die Abgase kontrolliert beseitigen zu können, wurden derartige Vorrichtungen sowie ein Teil des Kühlbandes, über dem diese Vorrichtungen angeordnet sind, bereits mit Absaugkästen mit erheblichen Abmessungen umgeben. Um eine Kondensation der Abgase im Inneren derartiger Absaugkästen und an deren Wänden zu verhindern, wurden an den Wänden der Absaugkästen Heizeinrichtungen angeordnet.

Aus der EP-A-0 131 201 ist weiterhin eine Vorrichtung zum Pelletieren bekannt, bei der die aus einer Pelletpresse austretenden Pellets über eine Rohrleitung einer Kühlvorrichtung zugeführt werden, in der die zugeführten Pellets auf mehreren übereinander angeordneten Siebbändern hin- und herbewegt und schließlich zu einem Auslaß geführt werden. Durch die Kühlvorrichtung wird mit Hilfe eines Gebläses Kühlluft hinduchgesaugt und die von den Pellets auf die Kühlluft übertragene Wärme wird am Ausgang des Gebläses in einem Wärmetauscher nutzbar gemacht. Hierbei besteht jedoch die Gefahr, daß durch die in die Kühlvorrichtung eintetende kalte Kühlluft in dieser Kühlvorrichtung Lösungsmittel oder Wasserdampf-kondensiert, das bzw. der sich an den Pellets anlagert und/oder über den Pellet-Austritt der Kühlvorrichtung diese verläßt.

Der Erfindung liegt die Aufgabe zugrunde, eine Vorrichtung der eingangs genannten Art zu schaffen, die bei einfachem Aufbau ein zuverlässiges Auffangen der bei der Verarbeitung der Materialien entstehenden Abgase ermöglicht.

Diese Aufgabe wird durch die im kennzeichnenden Teil des Patentanspruchs 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung der Vorrichtung werden die Abgase unmittelbar in dem Bereich abgesaugt, in dem sie entstehen, nämlich in dem Bereich, in dem das Material aus den Bohrungen der Hohlwalze austritt und auf die Kühlfläche abgelegt wird. Dadurch, daß der Abgasschacht teilweise durch die Außenfläche des ohnehin vorhandenen Heizmantels begrenzt ist, ergibt sich ein einfacher Aufbau, wobei der weitere, die andere Begrenzung des Abgasschachtes bildende Mantel, der auf der Außenseite des Heizmantels angeordnet ist, gleichzeitig die auch sonst erforderliche Isolation der Außenseite des Heizmantels ergibt und seinerseits isoliert sein kann.

Dadurch, daß der Abgasschacht durch die Außenseite des Heizmantels mit beheizt wird, wird eine Kondensation der aufgefangenen Gase in diesem Bereich sicher vermieden und die Abgase gelangen über den Abgasschacht zu einem Abgasstutzen, von dem aus die Abgase Lösungsmittelrückgewinnungs- und/oder Filtereinrichtungen zugeführt werden können.

Um die Absaugwirkung des Abgasschachtes steuern zu können, kann dieser Abgasschacht, der vorzugsweise an den Stirnseiten der Hohlwalze verschlossen ist, an seinem in Drehrichtung der Hohlwalze hinteren Ende, das dem Ansaugende für die Abgase entgegengesetzt ist, durch eine einstellbare Klappe verschlossen werden, die die Steuerung der an diesem hinteren Ende angesaugten Umgebungsluft ermöglicht.

Diese Klappe ist vorzugsweise an dem weiteren Mantel angelenkt, so daß in teilweise geöffnetem Zustand auch ein Teil der Abgase abgesaugt werden kann, der aus gegebenenfalls am Außenumfang der Hohlwalze anhaftendem Material austritt.

Der Heizmantel und/oder der weitere Mantel erstrecken sich vorzugsweise über den oberhalb der horizontalen Mittelebene liegenden Bereich der Hohlwalze konzentrisch zu dieser, während das unterhalb dieser Mittelebene liegende Ansaugende benachbart zu dem Bereich der Kühlfläche, auf dem die Pastillen oder Granalien abgelegt werden, direkt auf diese Kühlfläche gerichtet ist und gegebenenfalls erweitert ist, um die Ansaugwirkung für die Abgase zu verbessern. Dieses Ansaugende kann sich weitgehend bis in die Nähe der Kühlfläche erstrecken.

Ein Ausführungsbeispiel wird im folgenden anhand der Zeichnungen noch näher erläutert.

In der Zeichnung zeigen:
- Fig. 1: eine vereinfachte schematische Querschnittsansicht in einer Ausführungsform der Vorrichtung,

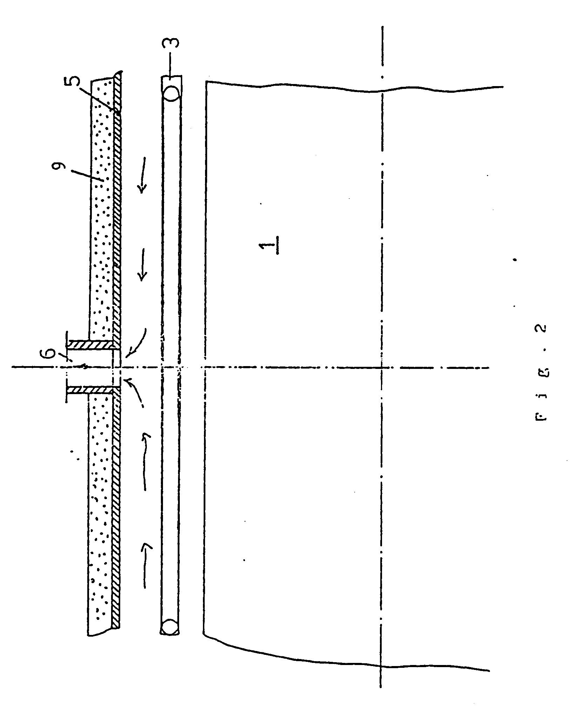

- Fig. 2: eine weggebrochen dargestellte Schnittansicht entlang der Linie II-II nach Fig. 1.

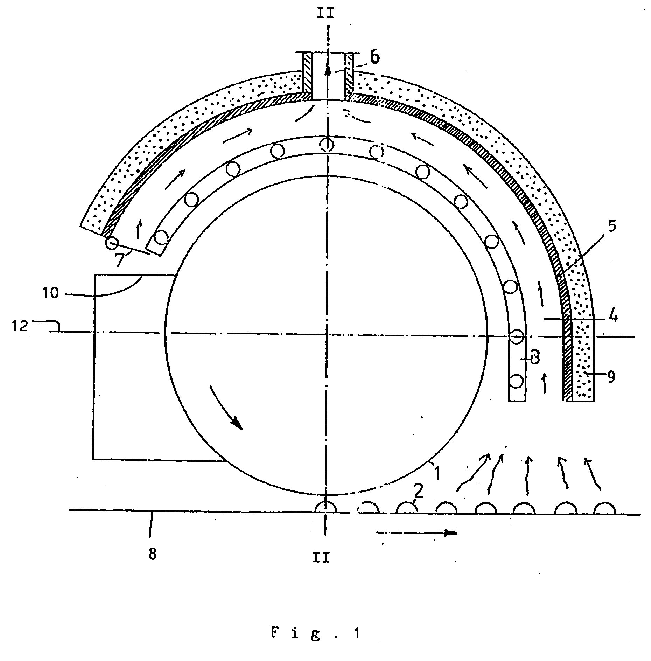

In Fig. 1 ist eine Querschnittsansicht einer Ausführungsform der Vorrichtung in vereinfachter Weise dargestellt, wobei die grundlegende Vorrichtung beispielsweise der entspricht, die in der DE-C-39 02 957 ausführlich erläutert ist.

Diese Vorrichtung weist eine Hohlwalze 1 auf, die auf ihrer Innenfläche mit einer Innenverzahnung versehen ist, die mit der Außenverzahnung einer vorzugsweise im unteren Bereich in der Hohlwalze angeordneten, nicht dargestellten Auspreßwalze zusammenwirkt. In den Preßspalt zwischen der Auspreßwalze und der Innenverzahnung der Hohlwalze 1 eingeführtes Material wird durch Bohrungen ausgepreßt, die sich von den Zahnböden der Innenverzahnung der Hohlwalze 1 aus zu deren Außenseite erstrecken, so daß dieses Material in Form von Pastillen oder Granalien 2 auf einer Kühlfläche, vorzugsweise einem umlaufenden Kühlband 8 abgelegt wird.

Ein Teil des Umfanges der Hohlwalze 1 ist zur Steuerung der Temperatur dieser Hohlwalze miteinem Heizmantel 3 versehen, der mit radialem Abstand von der Hohlwalze 1 angeordnet ist und der sich in den meisten Fällen überden oberhalb einer horizontalen Mittelebene 12 liegenden Bereich der Hohlwalze und konzentrisch zu dieser erstreckt.

Bei derdargestellten Ausführungsform der Vorrichtung ist dieser Heizmantel 3 mit Abstand von einem weiteren Mantel 5 umgeben, der vorzugsweise auf seiner Außenseite eine Isolierschicht 9 trägt. Damit bildet der weitere Mantel 5 eine Isolation für die Außenseite des Heizmantels 3, so daß dessen Wärmeverluste verringert werden. Zwischen dem Heizmantel 3 und diesem Außenmantel 5 wird ein Abgasschacht 4 gebildet, der mit einem Absaugstutzen 6 in Verbindung steht.

Wie aus Fig. 1 zu erkennen ist, ist das Ansaugende 11 dieses Abgasschachtes 4, das oberhalb des Aufgabebereiches der Pastillen auf der Kühlfläche 8 liegt, im wesentlichen auf diese Kühlfläche 8 gerichtet (unterhalb der genannten Mittelebene 12), wobei dieses Ansaugende gegebenenfalls trichterförmig erweitert sein kann.

Unmittelbar nach der Aufgabe des Materials auf die Kühlfläche 8 treten aus den Pastillen oder Granalien 2 Abgase aus, die möglichst schnell abgesaugt werden sollten, um einen Eintritt dieser Abgase in die Umgebungsluft zu verhindern. Diese Abgase treten jedoch aus den Granalien oder Pasten 2 lediglich über eine begrenzte Strecke bei der Weiterbewegung des die Kühlfläche bildenden Kühlbandes 8 aus, so daß der zwischen dem Heizmantel 3 und dem weiteren Mantel 5 gebildete Abgasschacht 4 diese Abgase in wirkungsvoller Weise absaugen kann.

An dem dem Ansaugende 11 gegenüberliegenden Ende des Absaugschachtes 4 kann eine einstellbare Klappe 7 angeordnet sein, die vorzugsweise an dem weiteren Mantel 5 angelenkt ist, so daß beim teilweisen Öffnen dieser Klappe 7 ein Spalt zwischen dieser Klappe und dem Heizmantel gebildet wird, durch den außer der Umgebungsluft auch Abgase angesaugt werden, die aus dem Material austreten, das gegebenenfalls noch an der Außenfläche der Hohlwalze 1 bei deren Bewegung von dem Kühlband 8 fort anhaftet und gegebenenfalls mit Hilfe einer Abstreifplatte 10 von dieser Außenfläche abgestreift wird.

Das über den Absaugstutzen 6 aus dem Abgasschacht 4 abgesaugte Abgas kann einer Reinigungsvorrichtung für das Abgas, beispielsweise einer Kondensations- oder Filtereinrichtung zugeführt werden, so daß die bei der Aufgabe des Materials auf das Kühlband 8 entstehenden Abgase in wirkungsvoller Weise unschädlich gemacht werden können.

Durch die Klappe 7 kann in der bereits erläuterten Weise der Eintritt von Umgebungsluft in den Absaugschacht und damit die Absaugwirkung an dem Ansaugende 11 des Abgasschachtes 4 gesteuert werden. Hierdurch läßt sich auch die Wirkungsweise nachgeschalteter Kondensations- und Filtereinrichtungen hinter dem Absaugstutzen 6 in optimaler Weise steuern.

Die Stirnseiten des durch den Heizmantel 3 und den weiteren Mantel 5 gebildeten Abgasschachtes 4 können entweder vollständig oder teilweise verschlossen sein, um eine optimale Absaugung der im Betrieb der Vorrichtung entstehenden Abgase zu steuern.

Die erfindungsgemäße Vorrichtung ermöglicht in einfacher Weise durch einfache Hinzufügung eines weiteren Mantels eine wirkungsvolle Absaugung der bei der Produktaufgabe entstehenden Abgase unmittelbar an deren Entstehungsort, ohne daß aufwendige Absaugeinrichtungen erforderlich sind.

Durch die Anordnung des Absaugschachtes zwischen dem Heizmantel und dem weiteren Mantel und gegebenenfalls durch die Isolation der Außenseite des weiteren Mantels wird eine Kondensation dieser Abgase im Abgasschacht sicher verhindert.

## Patentansprüche

1. Vorrichtung zur Erzeugung von Granalien oder Pastillen aus fließfähigem Material, bei der das Material dem Preßspalt zwischen einer umlaufenden Hohlwalze (1) mit Innenverzahnung und einer mit dieser Innenverzahnung in Eingriff stehenden außenverzahnten Auspreßwalze zugeführt wird, wobei sich von den jeweiligen Zahnböden der Innenverzahnung der Hohlwalze (1) zu deren Außenseite hin erstreckende Bohrungen vorgesehen sind, durch die hindurch das Material beim Eingriff mit der Auspreßwalze ausgepreßt und in Form von Pastillen oder Granalien (2) auf einer Kühlfläche (8) abgelegt wird, und wobei zumindest ein von der Kühlfläche (8) entfernter Teil des Außenumfangs der Hohlwalze (1) von einem Heizmantel (3) umgeben ist,
dadurch gekennzeichnet, daß auf der Außenseite des Heizmantels (3) und mit Abstand von diesem ein weiterer Mantel (5) angeordnet ist, der eine Wärmeisolation für die Außenseite des Heizmantels bildet und durch die Außenseite des Heizmantels (3) beheizt wird, daß durch den Abstand zwischen dem Heizmantel (3) und dem weiteren Mantel (5) ein Abgasschacht (4) gebildet ist, der mit einem Absaugstutzen (6) für aus dem Material austretende Gase in Verbindung steht, und daß der Heizmantel und der weitere Mantel sich über den oberhalb einer horizontalen Mittelebene liegenden Bereich der Hohlwalze und konzentrisch zu dieser erstrecken.

2. Vorrichtung nach Anspruch 1,
dadurch gekennzeichnet, daß der Heizmantel (3) und/oder der weitere Mantel (5) sich unterhalb der Mittelebene (12) in Richtung auf das Kühlband (8) auf dessen Pastillen-Abgabeseite erstrecken.

3. Vorrichtung nach einem der vorhergehenden Ansprüche,
dadurch gekennzeichnet, daß der Abgasschacht (4) an seinem in Bewegungsrichtung der Hohlwalze (1) hinteren Ende durch eine einstellbare Klappe (7) zur Steuerung des Einströmens von Umgebungsluft teilweise oder vollständig verschließbar ist.

4. Vorrichtung nach einem der vorhergehenden Ansprüche,
dadurch gekennzeichnet, daß der Abgasschacht (4) an den Stirnseiten der Hohlwalze (1) verschlossen ist.

5. Vorrichtung nach einem der vorhergehenden Ansprüche,
dadurch gekennzeichnet, daß der weitere Mantel (5) auf seiner Außenseite mit einer Isolierschicht (9) versehen ist.

## Claims

1. Device for producing pellets or tablets from free-flowing material, where the material is supplied to the extrusion gap between a revolving hollow roll (1) with internal gear teeth and an extrusion roll equipped with external gear teeth and meshing with said internal gear teeth, there being provided bores extending from the respective bases of the internal gear teeth of the hollow roll (1) to the outside thereof, through which bores the material is extruded in engagement with the extrusion roll and is deposited in the form of tablets or pellets (2) on a cooling surface (8), and at least one part of the outer circumference of the hollow roll (1) that is remote from the cooling surface (8) being surrounded by a heating jacket (3),
characterised in that arranged on the outside of the heating jacket (3) and spaced apart therefrom is an additional jacket (5) which forms a heat insulator for the outside of the heating jacket and is heated by the outside of the heating jacket (3), and that the spacing between the heating jacket (3) and the additional jacket (5) forms a waste gas flue (4) which communicates with an extractor connection (6) for gases coming out of the material, and that the heating jacket and the additional jacket extend over the area of the hollow roll that is situated above a horizontal median plane and concentrically thereto.

2. Device according to claim 1, characterised in that the heating jacket (3) and/or the additional jacket (5) extend beneath the median plane (12) towards the cooling belt (8) on the tablet delivery side thereof.

3. Device according to any of the preceding claims, characterised in that the waste gas flue (4) is adapted to be completely or partially sealed to control the inflow of atmospheric air by an adjustable flap (7) at the end of the flue that is at the back when viewed in the direction in which the hollow roll (1) moves.

4. Device according to any of the preceding claims, characterised in that the waste gas flue (4) is sealed at the end faces of the hollow roll (1).

5. Device according to any of the preceding claims, characterised in that the additional jacket (5) is provided on its exterior with an insulating layer (9).

## Revendications

1. Dispositif pour la fabrication de grenailles ou de pastilles à partir d'un matériau coulant, dans lequel le matériau est délivré à l'interstice de compression situé entre un cylindre creux rotatif (1) à denture interne, et un cylindre d'expulsion à denture externe, en prise avec cette denture interne; dispositif dans lequel sont prévus des alésages qui s'étendent à partir des fonds respectifs des dents de la denture interne du cylindre creux 1, vers la face extérieure de ce dernier, et à travers lesquels le matériau est expulsé lors de la venue en prise avec le cylindre d'expulsion et est déposé sur une surface de refroidissement (8) sous la forme de pastilles ou de grenailles (2); et dans lequel au moins une partie du pourtour extérieur du cylindre creux (1) éloignée de la surface de refroidissement (8) est entourée par une enveloppe chauffante (3),
caractérisé en ce qu'une enveloppe supplémentaire (5) est disposée sur la face extérieure de l'enveloppe chauffante (3), à distance de cette dernière ; et en ce qu'un puits (4) à gaz d'échappement, forme par l'espacement entre l'enveloppe chauffante (3) et l'enveloppe supplémentaire (5) est en communication avec un raccord 6 d'évacuation par aspiration des gaz s'échappent du matériau et en ce que l'enveloppe chauffante et l'enveloppe supplémentaire s'étendent au-dessus de la zone située au-dessus d'un plan médian horizontal du cylindre creux et de façon concentrique.

2. Dispositif selon la revendication 1, caractérisé en ce que l'enveloppe chauffante (3) et/ou l'autre enveloppe (5) s'étendent au-dessous du plan médian (12) en direction de la bande de refroidissement (8) sur son côté de sortie des pastilles.

3. Dispositif selon l'une des revendications précédentes, caractérisé en ce que le puits (4) à gaz d'échappement peut être partiellement ou intégralement obturé par l'intermédiaire d'un volet réglable (7), à son extrémité postérieure dans le sens de mouvement du cylindre creux (1) afin de commander l'afflux d'air ambiant.

4. Dispositif selon l'une des revendications précédentes, caractérisé en ce que le puits à gaz d'échappement (4) est obturé aux faces extrêmes du cylindre creux (1).

5. Dispositif selon l'une des revendications précédentes, caractérisé en ce que l'enveloppe supplémentaire (5) est pourvue d'une couche isolante (9) sur sa face extérieure.
